# EUROPEAN PATENT SPECIFICATION

(11) **EP 0 645 728 B1**
(45) Date of publication and mention of the grant of the patent: **30.10.2002**
(21) Application number: 94113239.1
(22) Date of filing: 24.08.1994
(51) Int. Cl.: G06K 7/10, H04M 1/274

(54) **Remote controller and telephone incorporating bar code reading facilities**
Fernsteueranordnung und Telefon mit Mitteln zum Lesen von Balkenkoden
Télécommande et téléphone incorporant des moyens de lecture de code à barre

(30) Priority: 25.08.1993 US 111531; 26.07.1994 US 273180
(43) Date of publication of application: 29.03.1995
(60) Divisional application: 02001441.1
(73) Proprietor: SYMBOL TECHNOLOGIES, INC., Bohemia New York 11716-3300 (US)
(72) Inventor: White, Jay P., Bohemia, NY 11716 (US); Stern, Miklos, Flushing, NY 11367 (US); Barkan, Edward, Miller Place, NY 11764 (US)
(74) Representative: Wagner, Karl H., Dipl.-Ing.

(56) References cited:
- EP-A- 0 367 299
- DE-A- 3 741 788
- DE-A- 3 814 728
- DE-A- 4 109 482
- US-A- 4 907 264
- PATENT ABSTRACTS OF JAPAN vol. 013, no. 103 (E-725) 10 March 1989 & JP-A-63 275 250 (HASHIMOTO CORP) 11 November 1988

## Description

This invention relates to a novel telephone set and built-in scanner assembly for reading and transmitting data pertaining to bar codes, and further, to a bar code information processing system implementing such a telephone set and scanner assembly.

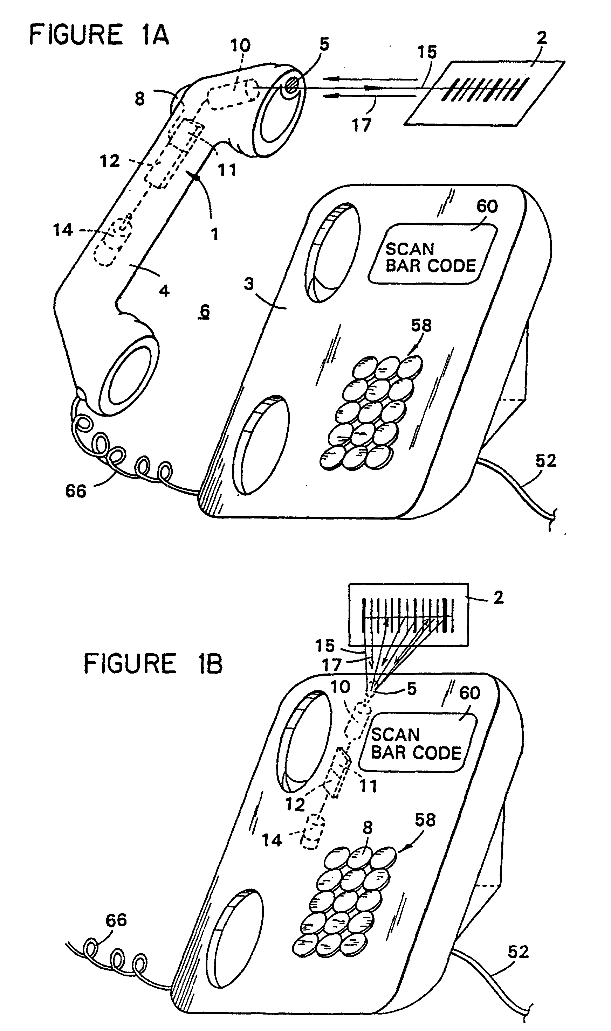

Optically encoded information, such as far codes, is common. As illustrated in Figures 1A, 1B a bar code symbol 2 consists of a series of light and dark regions, typically in the form of rectangles. The widths of the dark regions, the bars, and/or the widths of the light spaces between the bars indicate the encoded information. A specified number and arrangement of these elements represent a character. Standardized encoding schemes specify the arrangements for each character, the acceptable widths and spacings of the elements, the number of characters a symbol may contain or whether symbol length is variable, etc. The known symbologies include, for example, UPC/EAN, Code 128, Codabar, and Interleaved 2 of 5.

To decode a bar code symbol and extract a legitimate message, a bar code reader illuminates the bar code and senses the light reflected therefrom to detect the widths and spacings of the bar code and produces an electrical signal corresponding to the scanned bar code. This electrical signal is decoded to provide multiple alphanumerical characters which are descriptive of the article to which the bar code is attached or to some characteristic thereof. Such characters are typically represented in digital form as an input to a data processing system for applications in point-of-sale processing, inventory control, and the like.

There are several different types of bar code readers. A first type, a wand, contains an emitter and a detector, and the user manually moves the wand across the bar code. A detector senses the light reflected from a spot scanned by the wand across the bar code, and produces an electrical signal representing the encoded information. Wands have been disclosed, for example, in U.S. Patent Nos. 4,654,482, 4,907,264 and 4,937,853.

Another type of bar code reader is an optical scanner. The optical scanner is implemented as a gunshaped device, having a pistol-grip type handle. A lightweight plastic housing contains a laser light source, a detector, optics and signal processing circuitry and a decoder, as well as a battery or other power source. A light-transmissive window in the front end of the housing allows outgoing light beam to exit and incoming reflected light to enter. Optical scanners have been disclosed, for example, in U.S. Patent Nos. 4,251,798; 4,360,798; 4,369,361; 4,387,297; 4,409,470 and 4,460,120, all of which have been assigned to Symbol Technologies, Inc., the assignee of this application.

Bar codes having become common, some telephone systems have incorporated bar code readers, such as disclosed in U.S. Patent Nos. 4,503,288, 4,654,482, 4,907,264, 4,937,853, 4,947,028 and 4,975,948 and DE 30 11 511. For example, in U.S. Patent Nos. 4,654,482, and 4,947,028, a bar code reader is attached to a telephone system for merchandise ordering and/or payment. Because the bar code reader and telephone set are separate, prior art telephone systems require more desktop "real estate," i.e, more space, compared to a telephone system that could incorporate the bar code reader in the telephone set. Thus, DE 30 11 511 to Thies and U.S. Patent No. 4,907,264 to Seiler et al., and also JP-A-63 275 250, for example, disclose a reading wand incorporated into a handset for dialling a telephone number after reading a bar coded telephone number. However, because the handset is bulky and cumbersome, the user has difficulty in moving the want of the handset across a bar code in order to accurately read the bar code. Further, Thies and Seiler et al. use the wand only for dialling a telephone number and hence, is not useful in telephone systems requiring bar code readers for reading bar codes representing other than telephone numbers and transmitting the decoded bar code information over the telephone line.

It is an object of the present invention to provide a telephone system for overcoming the problems of the prior art. The telephone based bar code reading system may have an optical scanner incorporated into the handset or the telephone base. Such telephone bar code reading system reduces the desktop "real estate," and reads bar codes for auto-dialling of telephone numbers and transmits decoded bar code information over the communication systems. To achieve the foregoing and other objects, and to overcome the shortcomings discussed above, a telephone set enabling reading to indicia in accordance with the present invention comprises, the features as set forth in claim 1. Preferred embodiments of the invention may be gathered from the dependent claims.

The invention will be described in detail with reference to the following drawings in which like reference numerals refer to like elements wherein:
Figure 1A illustrates a telephone handset incorporating an optical scanner in accordance with the invention;
Figure 1B illustrates a telephone base incorporating an optical scanner;
Figure 2 illustrates in detail a scan module of an optical scanner depicted in Figures 1A and 1B;
Figure 3 is a block diagram of the telephone set having an optical scanner;
Figure 4 illustrates the optical scanner incorporated into a handset of a cordless telephone;
Figure 5 is a flow chart illustrating the sequence for auto-dialling;
Figure 6 illustrates a communication system for transmitting decoded bar code information by a telephone system to a mail-order system;
Figure 7 illustrates bar coded information of a catalog being scanned by an optical scanner in a handset;
Figure 8 is a flow chart illustrating the sequence for automated mail-ordering of items in the catalogue of Figure 7 over the communication system of Figure 6.

Figure 1A is a schematic drawing of a handset 4 of a telephone set 6 having a handset-implemented scanner 1 (various components of the telephone have been omitted for simplicity). The handset 4 is designed to be aimed at a bar code symbol 2 by a user from a position in which the optical scanner 1 is spaced from the bar code symbol, i.e., the scanner does not contact the bar code symbol 2 and is not manually moved across the symbol. The handset 4 has a trigger 8 to activate a light beam from a scan module 10, and a light-transmissive window 5 allows the light beam 15 to exit from the handset 4. The light beam is reflected off the bar code 2, and the reflected light 17 re-enters through the light-transmissive window 5. The scan module 10 detects the reflected light 17 and produces an electrical signal proportional to the intensity of the reflected light.

A digitizer 11, associated with or included in the scanner, processes the electrical signal to produce a pulse signal, where the widths and spacings between the pulses correspond to the widths of the bars and the spacings between the bars. The digitizer serves as an edge detector or wave shaper circuit, and the threshold value set by the digitizer determines what points of the electrical signal represent bar edges. The pulse signal from the digitizer is applied to the decoder 12. The various decoder functions are performed by a CPU with associated program memory and random access data memory.

The decoder 12 determines the pulse widths and spacings of the signal from the digitizer. The decoder 12 then analyzes the widths and spacings and decodes a legitimate bar code message that includes an analysis to recognize legitimate characters and sequences, as defined by the appropriate code standard. This may also include an initial recognition of the particular standard encoding scheme. This recognition of the standard is typically referred to as auto-discrimination.

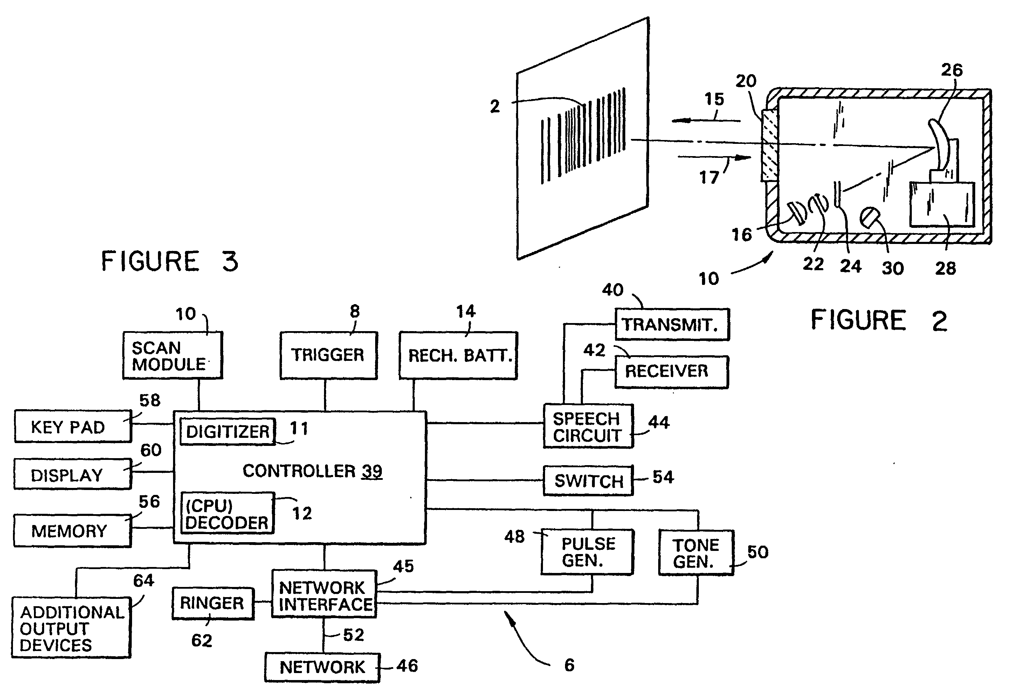

Figure 2 illustrates in more detail the scan module 10 of an optical scanner depicted in Figures 1A and 1B. The scan module 10 contains light source, mirrors, scanning motor and detector positioned in the module housing as shown. To scan a bar code, a laser light source 16 generates a light beam which is optically modified to form a beam spot of a certain size at a working distance. The light beam is directed by optical components along a light path toward the bar code symbol 2 located in the vicinity of the working distance for reflection from the bar code symbol 2. A lens 22 (or multiple lens system) may be used to focus the scanning beam into a scanning spot at an appropriate reference plane.

The laser light source 16, such as a semiconductor laser diode, introduces a light beam into the axis of the lens 22, and the beam passes through a partially-silvered mirror 24 and other lenses or beam-shaping structure as needed. The light beam is reflected from an oscillating mirror 26 which is coupled to a scanning motor 28 energized when the trigger 8 is pulled. The oscillation of the mirror 26 causes the outgoing light beam 15 to scan back and forth in a desired pattern. Alternatively, the laser light source 16 can be oscillated to cause the outgoing light beam 15 to scan.

A variety of mirror and motor configurations can be used to move the beam in a desired scanning pattern. For example, U.S. Patent No. 4,251,798 discloses a rotating polygon having a planar mirror at each side, each mirror tracing a scan line across the symbol. U.S. Patent Nos. 4,387,297 and 4,409,470 employ a planar mirror that is repetitively and reciprocally driven in alternate circumferential directions about a drive shaft on which the mirror is mounted. U.S. Patent No. 4,816,660 discloses a multi-mirror construction composed of a generally concave mirror portion and a generally planar mirror portion. The multi-mirror construction is repetitively and reciprocally driven in alternate circumferential directions about a drive shaft on which the multi-mirror construction is mounted.

The light 17, reflected back by the bar code symbol 2, passes back through a window 20 for application to a detector 30. In the exemplary scan module 10 illustrated in Figures 1A and 1B, the light 17 reflects off the mirror 26 and partially-silvered mirror 24 and impinges on the light sensitive detector 30. The detector 30, such as an optical sensor or a photodetector having a field of view extending across and slightly past the bar code symbol 2, detects light of variable intensity reflected off the bar code symbol 2 and generates electrical signals indicative of the detected light.

Another example of a suitable scan module is disclosed in commonly assigned copending application Serial No. 07/952,414, now US-A-5 367 151. Further, a scan module, either with or without the digitizer and decoding circuitry, could be formed on a single substrate using appropriate micro-machining techniques, such as described in commonly assigned copending application Serial No. 07/745,776.

For illustrative purposes, the digitizer 11 and the decoder (CPU) 12 are shown as included in a controller 39 in Figure 3. However, as illustrated in Figures 1A and 1B, the digitizer 11 and decoder 12 may be separate from the controller 39. As can be appreciated, the handset 4 can incorporate the scan module 10, the trigger 8, and the rechargeable battery 14, and the telephone base 35 can incorporate the digitizer 11 and the decoder 12 with the controller 39. A transmitter (microphone) 40 and a receiver (speaker) 42 are coupled to a speech circuit 44 for transmission and reception of audio signals. The speech circuit 44 is also coupled to the controller 39 for transmission and reception of communication signals to and from a communication network interface 45 and a communications network 46.

The scan module 10, trigger 8 and rechargeable battery 14 are connected to the controller 39. When the trigger 8 is operated, the controller 39 activates the scan module 10 for reading a bar code. The controller 39 is also coupled to a pulse generator 48 and a tone generator 50 for converting a decoded bar code information to communication signals for transmission on a telephone line 52. A switch 54 is provided for activating one or the other of the pulse and tone generators. The pulse generator 48 causes transmission of the decoded bar code information as dial pulses to the telephone line 52, whereas the tone generator 50 transmits the same information as tones.

A memory 56, which can be any combination of RAMs, ROMs, EPROMs and EEPROMs, is also connected to the controller 39. The memory 56 stores telephone numbers for autodialing as well as the read bar coded information for conversion into communication signals and for transmission to the communications network 46. Alternatively, the controller 39 can bypass the memory 56 and directly transmit the read bar coded information over the telephone line 52. Further, the memory 56 stores the program routines for executing various functions, such as auto-dialing, mail-ordering, making payments, keeping track of sales and inventory, etc.

A keypad 58 provides inputs to the controller 39, and a display 60, in conjunction with a display driver (not shown), displays the status of the telephone set, the optical scanner and various other information. The keypad 58 includes push buttons for manually entering numbers and for auto-dialing. When the auto-dialing push button is pressed, the controller waits for either another manual input of numbers corresponding to a telephone number stored in the memory 56 or electrical signals from the scan module 10 for decoding and dials the appropriate telephone numbers using the pulse generator 48 or the tone generator 50. The display 60 also indicates the number being dialed during auto-dialing.

The keypad 58 further includes enter and cancel push buttons for entering and canceling the decoded bar code information. For example, when the enter push button is pressed, the controller 39 either stores the decoded bar code information in the memory or transmits the decoded bar code information to the telephone line 52 using the pulse or tone generators 48, 50. When the cancel push button is depressed, the controller 39 disregards the electrical signals from the scan module. The display 60 indicates whether the scanned bar code should be entered or cancelled and confirms the entering and cancelling of the scanned bar code.

The display 60 is also used to display various other information. For example, if the telephone set 6 receives an incoming telephone signal, the display, in conjunction with a ringer 62, indicates to the user that there is an incoming call. If the optical scanner 1 is in use when the incoming telephone signal is received, the user can depress a push button on the keypad 58 to disable the optical scanner and answer the telephone call. Alternatively, the controller 39 can automatically switch over to allow the user to answer the telephone call after storing the decoded bar code information in the memory 56 for later use.

As can be appreciated, the various components of the telephone set 6, and the optical scanner can be placed in the handset 4. In the preferred embodiment of Figure 1A, the scan module 10, the digitizer 11, the decoder 12, the trigger 8 and the rechargeable battery 14 are placed in the handset 4, and the components of the telephone set 6 can be distributed in the handset 4 and the telephone base 3. Further, additional output devices 64 can be coupled to the controller 39.

Typically, the user operates the optical scanner while a cord 66 is attached to handset 4 and the base 3. However, the optical scanner 1 can be used with the cord 66 detached, i.e., portable mode. In this mode, the user detaches the cord 66 from the handset 4 or the telephone base 3, and the rechargeable battery 14 provides power to the components in the handset 4. The user aims the window 5 of the telephone handset 4 at the bar code 2 and depresses the trigger 8 to read the bar code 2. The controller 39 stores the read bar code information in the memory 56 when the controller 39 detects that the cord 66 is detached from the handset 4 or the telephone base 3.

When the cord 66 is reattached to the handset 4 or the telephone base 3, the user depresses a push button on the keypad to begin the transmission of the stored information over the telephone line 52. Alternatively, the controller 39 automatically transmits the stored information when the controller 39 detects the reattachment of the cord 66 to the handset 4 or the telephone base 3.

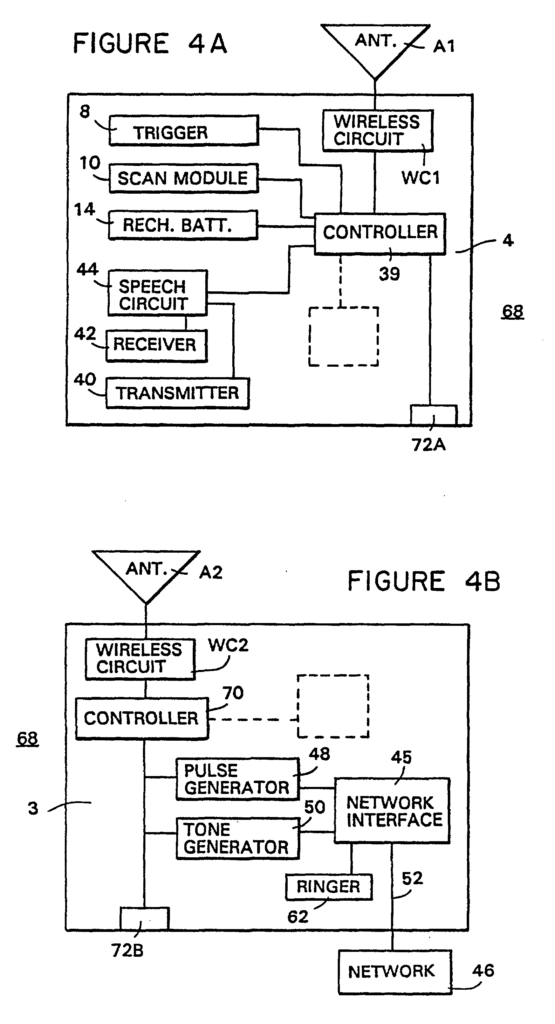

In an alternative embodiment, the optical scanner is incorporated into the handset of a cordless telephone. Cordless telephones are known in the art and are disclosed in, for example in U.S. Patent Nos. 4,481,382, 4,508,935 and 4,661,659. Figure 4 illustrates the optical scanner 1 incorporated in the handset 4 of the cordless telephone 68. Unlike a corded telephone, the cordless telephone 68 includes a wireless circuit WC1 and an antenna A1 in the handset 4 and a wireless circuit WC2 and an antenna A1 in the telephone base 3. Moreover, the telephone base 3 includes the pulse generator 48, the tone generator 50 and a second controller 70. As indicated in dotted lines, the keypad 58, display 60, memory 56, ringer 62 and additional output devices 64 can be incorporated in the handset 4 or the telephone base 3 or both. However, like the preferred embodiment of Figure 1A, the trigger 8, scan module 10, digitizer 11, decoder 12 and rechargeable battery 14 are incorporated in the handset 4 for reading the bar codes.

The optical scanner 1 of the cordless telephone 68 is operated in the same manner as a corded telephone. However, in the cordless telephone 68, the decoded bar code information is transmitted through the wireless circuit WC1 and antenna A1 of the handset 4 to the antenna A2 and wireless circuit WC2 of the telephone base 3 for processing by the controller 70, the pulse or tone generator 48, 50 and the communication network interface 45 to the telephone line 52. The controllers 39 and 70 can bypass the memory either in the handset 4 or the telephone base 3 to transmit the decoded bar code information to the telephone line 52 or can store the decoded bar code information in the memory for transmission onto the telephone line 52 after a predetermined period of time.

Alternatively, when the optical scanner 1 of the handset 4 is used to scan bar codes far from the telephone base and/or when the user wants the controller 39 to enter a store mode, the user can depress a button or the controller enters into a store mode of operation upon detection of weak antenna transmission signals to store the decoded bar code information in the memory. The stored information is transmitted to the telephone base 3 for transmission onto the telephone line 52 when the user depresses a transmit button to allow transmission of the stored information and/or when the controller 39 detects a strong antenna signal. Moreover, prior to the controller 39 terminating the telephone connection, the stored information can be transmitted to the telephone line 52 when the user places the handset 4 into a cradle (not shown) of the telephone base 3 so that there is a direct linkage between the handset 4 and the telephone base 3 through the contacts 72A, 72B.

As can be appreciated, the cordless telephone can be modified to incorporate the optical scanner in a cellular telephone. The cellular telephone may employ radio technology, such as spread spectrum for communication signals, to transmit and receive information. The use of spread spectrum in communications is disclosed in, for example, U.S. Patent Nos. 4,222,115, 4,672,658, 4,888,788, 4,918,707, 4,943,975, 4,964,138, 4,984,247, 5,016,255 and 5,022,047.

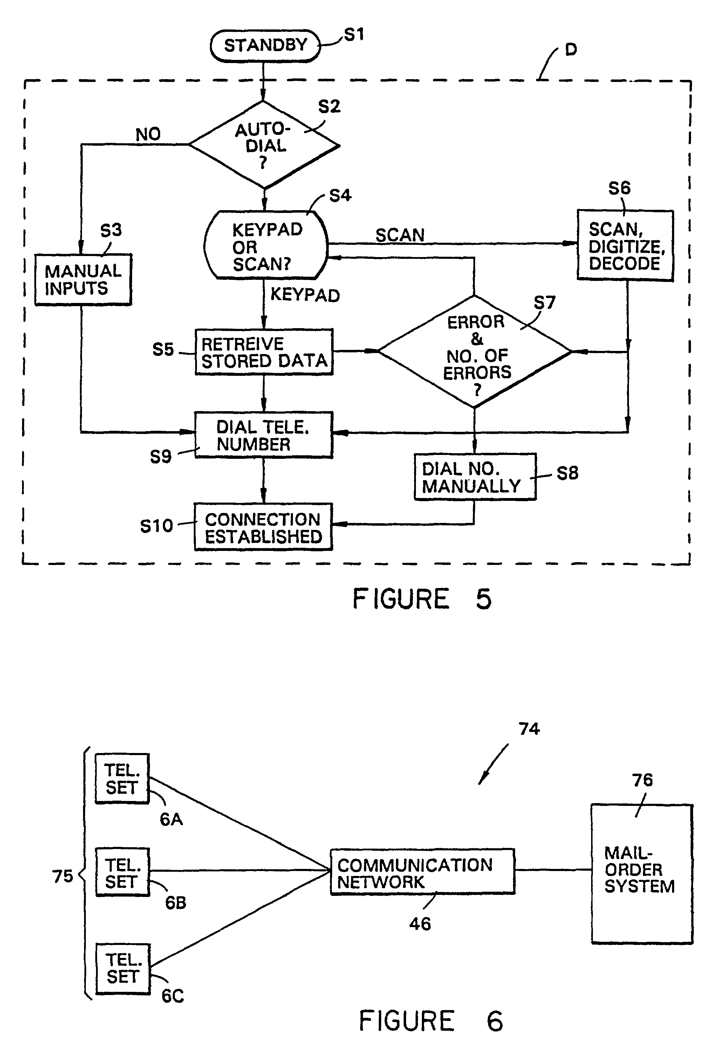

Figure 5 is a flow chart illustrating the sequence for auto-dialing a called party's telephone number by a caller/user. The telephone set is initially set at a standby mode (S1), and the controller waits for an auto-dial button to be depressed (S2). If the caller dials a telephone number instead of the auto-dial button, the controller dials the inputted telephone number (S3) and connection is established (S9, S10). If the auto-dial command is selected by depression of an auto-dial button, the controller waits for the caller/user to either select an appropriate combination of keypad inputs or activate the trigger (S4). When the controller detects keypad inputs, the controller retrieves the pre-stored telephone numbers in the memory for dialing (S5, S9) and establishing connection (S10) between the caller and the called party.

To auto-dial a telephone number using the optical scanner, the caller/user aims the window of the telephone handset at a bar coded telephone number. The bar coded telephone number can be printed on the telephone directory, business cards, credit cards, or any available medium having bar coded telephone numbers. When the caller/user activates the trigger, the bar coded telephone number is scanned and detected by the scan module (S6). The digitizer and decoder, respectively, digitizes and decodes the electrical signals from the scan module for dialing the decoded telephone number (S6, S9) and establishing connection (S10).

If the keypad inputs do not correspond to any pre-stored number, or when an error occurs during the scanning of the bar code, the display indicates an occurrence of the error. The controller instructs the user to re-enter the keypad inputs or re-scan the bar code (S7). The controller also tracks the number of error occurrences, and after a predetermined number of error occurrences, the controller terminates the auto-dial feature to instruct the caller/user to enter the telephone number manually (S8). Alternatively, the caller/user can terminate the auto-dial feature any time and dial the number manually.

Figure 6 illustrates a communication system 74 for transmitting decoded bar code information by a telephone system 75 to a mail-order system 76. The telephone system comprises a plurality of telephone sets 6A-6C (only three are shown for illustrative purposes), and each of the telephone set 6A-6C has an optical scanner 1 built into the telephone handset 4 or base 3. The communications network 46 couples the telephone system 75 and the mail-order system 76.

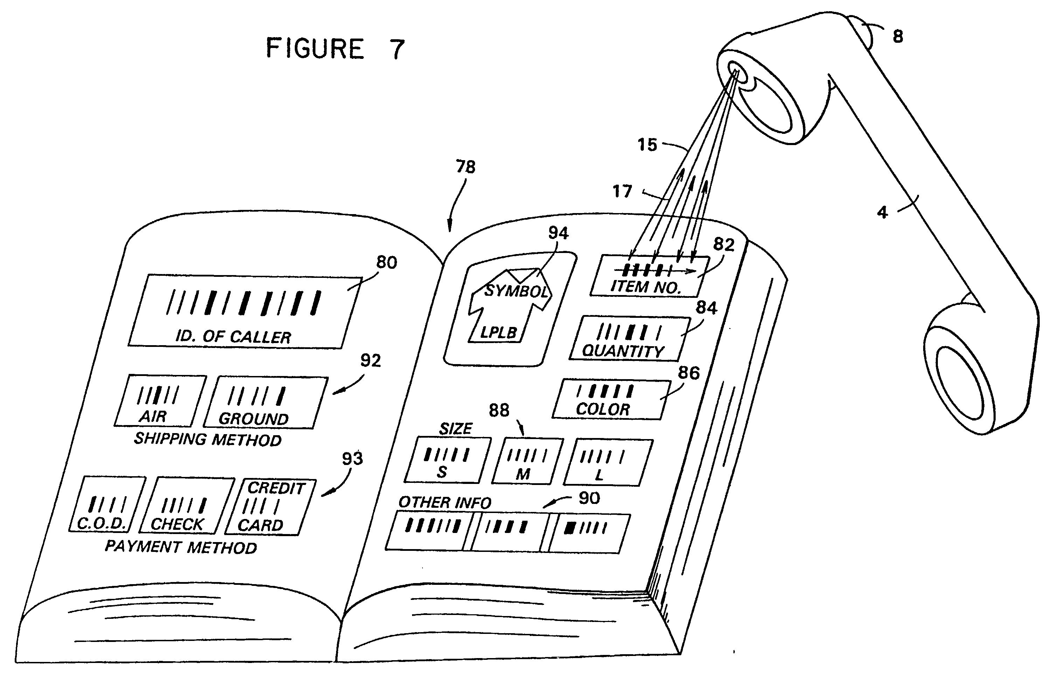

As illustrated in Figure 7, a caller scans bar coded information in a catalog 78 using, for example, the optical scanner 1 incorporated in the handset 4 to order an item 94. The catalog 78 has bar coded information 80 identifying the caller such as name, address and telephone number. Further, the catalog 78 includes bar coded item number 82, quantity 84, color 86, size 88 and other information 90 identify the item. The catalog 78 also includes bar code shipping method 92 and payment method 93.

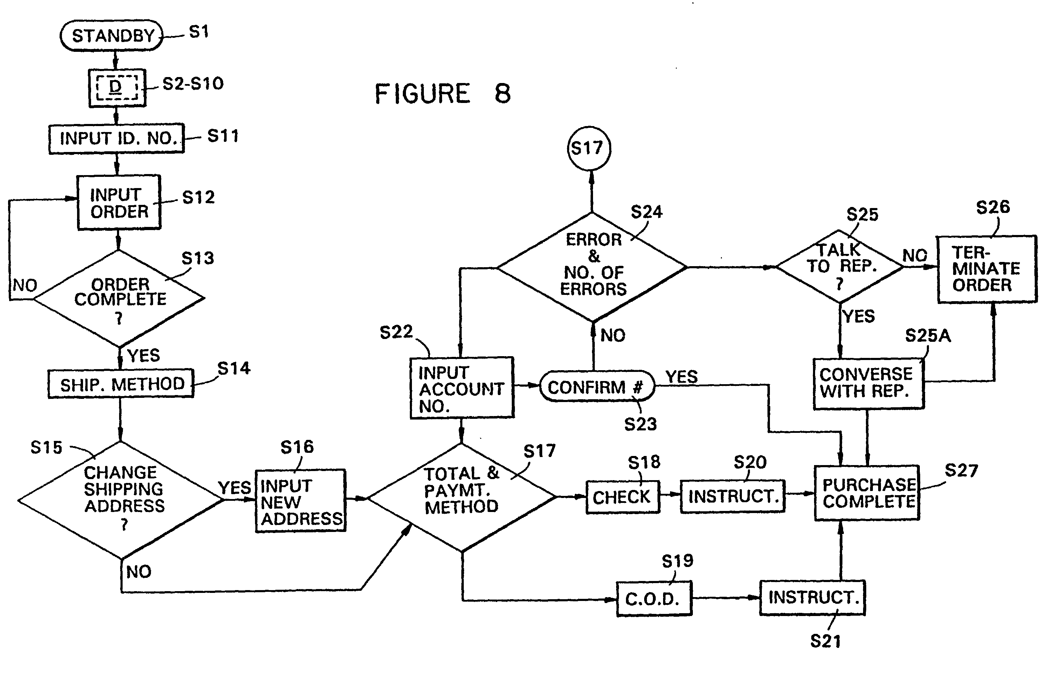

Figure 8 is a flow chart illustrating the sequence for ordering an item using the catalog 78 illustrated in Figure 7 and the telephone set 6A-6C of the telephone system 75 in the communications system 74 illustrated in Figure 6. The telephone is initially set at a stand-by mode (S1). Portion D (dotted lines) of the method illustrated in Figure 5 is used to either manually dial or auto-dial the telephone number of the mail-order company. For auto-dialing, the caller/user can scan the bar coded telephone number on the catalog to establish connection with the automated mail-ordering system of the mail-order company.

When connection is established, the automated system instructs the caller/user to enter his/or her bar coded identification 80 identifying the caller's name, address, telephone number and other information printed on the catalog 78 (S11). Such information may be also printed on a driver's license, business card, etc. The mail-order system 76 then instructs the caller/user to scan the bar coded item number 82, quantity 84, color 86, size 88 and other information 90 identifying the item on the catalog (S12).

After the decoded bar code information is received, the mail-order system 76 instructs whether the order is complete (S13). If the caller/user desires to order another item, the caller/user scans the bar coded information of other items (S12), and the sequence is repeated until the caller/user indicates to the automated system that the order is complete. Thereafter, the automated system instructs the caller/user to enter the bar coded shipping method 92, e.g., air or ground, (S14) and asks whether the shipping address is the same as the user identification information (S15). If not, the automated system instructs either to manually enter the shipping address or scan a bar coded shipping address (S16).

Thereafter, the automated computer transmits the total amount of the purchase and instructs the caller/user to scan the bar coded payment method 93 on the catalog 78 (S17). If the user scans either payment by check (S18) or C.O.D. (S19), the automated system sends the necessary instructions for such type of purchases (S20, S21) and the purchase is completed (S27). If the user chooses payment by a credit card, the automated system instructs the user to scan the bar coded account number on the credit card (S22). When the decoded account number is received, the automated system confirms the account number (S23). Once confirmed, the user can hang up the telephone to complete the purchase (S27), and the order will process by the mail-order company to deliver the ordered items after payment.

If there is an error (S24), the automated system instructs the user to re-scan the account number or if desired, manually enter the account number on the telephone keypad (S22). Further, the user can change the method of payment (S17). After a predetermined number of errors (S24), the automated systems asks the user whether he/she desires to talk to a representative or to terminated the order (S25). If the representative is able to help process the order (S25A), the order can be completed (S27), and the connection is terminated. If the user does not want to talk to a representative or the representative is not able to help, the user can hang up to terminate the order (S26).

As can be appreciated, during the entire ordering process, the controller conveys the instructions of the automated system to the user using the receiver and/or the display of the telephone set. Further, the scanned and decoded bar code information can be displayed for confirmation. A printer can be also attached as an additional output device to print out a hard copy of the order. Moreover, the enter and cancel buttons on the keypad can be used to send and correct scanned information to the automated system. Alternatively, the automated system can instruct the user to confirm the scanned information prior to sending the decoded bar code information.

The optical scanner in the handset can be used to track of inventory location. Clerks can "read" the inventory using the optical scanner of the handset by scanning a bar coded serial number on each piece of inventory to enter the location and status of the piece. (Rather than using a separate computer system, the location and status of the inventory can be processed by a PBX, which has its own computer system.)

The present invention can be used in business to keep track of inventory and sales. For example, in a retail store, a separate bar code reader may be provided to enter the bar coded labels of merchandise during purchase, and a separate computer system used to keep track of inventory and sale. With the present invention, the telephone set can be coupled to the cash register, and the bar coded label scanned by the optical scanner of the handset. Moreover, a local PBX computer may be used to keep track of the sales and inventory. At the end of the business day, the local PBX computer can transmit the sales and inventory information to the main computer at the headquarters of the retail store.

## Claims

1. A telephone set (6) with a handset (a) enabling reading of indicia comprising:
(a) means for transmitting and receiving audio signals over a communications network;
(b) an optical scanner (1) having
(i) means for emitting a light beam to scan across the indicia,
(ii) means for detecting the light beam reflected back from the indicia and producing corresponding electrical signals, and
(iii) means (11,12) for converting the electrical signals into decoded indicia information
wherein said optical scanner (1) is in said handset (a) of the telephone set (6),
said telephone set (6) being further **characterised in that**
said handset includes a trigger (8) for activating said optical scanner to read the indicia and
said optical scanner comprises means for automatically deflecting said light beam to scan across said indicia.

2. The telephone set of claim 1 further comprising a switch (54) provided to switch between two modes of operation of said telephone set.

3. The telephone set of daim 2 wherein said switch (54) is provided for activating one or the other of a pulse and tone generator (48, 50) so as to transmit said decoded indicia information as dial pulses or as tones, respectively, over said communications network.

4. The telephone set of Claim 1 further comprising means (14) for powering the optical scanner (1).

5. The telephone set of Claim 1, further including a manual control for entering and cancelling indicia which have been read by the optical scanner (1) for transmission on the communications network.

6. The telephone set of Claim 1 further comprising: a memory (56) for storing decoded indicia information, telephone numbers or programs for executing commands inputted to the telephone set; a keypad (58) for receiving the telephone numbers and commands; and means (45) for transmitting the audio signals and decoded indicia information and receiving communication signals from the communications network.

7. The telephone of Claim 1, wherein the emitting and detecting means are incorporated into a scan module (10) having: a laser light source (16) for emitting the light beam, a lens system (22) to focus the light beam, a mirror (26) for directing the light beam focused by said lens system to the indicia, a motor for oscillating said laser light source or said mirror such that the light beam scans across the indicia, and a detector (30) for detecting the light beam reflected from the indicia.

8. The telephone set of Claim 7, wherein the emitting and receiving means further comprises a window (20) for light passing between the scan module and detecting means.

9. The telephone set of Claim 1, wherein the converting means comprises: means (11) for digitizing the electrical signals; and means (12) for decoding the electrical signals, digitized by the digitizing means, into decoded indicia information.

10. The telephone set of Claim 1, wherein the telephone set (6) is of a corded, cordless or cellular type.

11. The telephone set of any of the preceding claims coupled to a communications network, further comprising:
means for transmitting the audio signals and decoded indicia information over the communications network.

12. The telephone set of Claim 2, wherein the handset further includes a rechargeable battery (14) for powering the optical scanner during portable operation of the handset.

13. The telephone set of Claim 11 further comprising: a memory (56) for storing decoded indicia information, telephone numbers or programs for executing commands inputted to the telephone set; a keypad (58) for receiving the telephone numbers or commands; and means (45) for transmitting the audio signals and decoded indicia information to the communications network and for receiving communication signals from the communications network.

14. The telephone set of Claim 2, wherein the handset includes a window (5) for light passing between the handset and a bar code to be read.

15. A communications system for transmitting decoded bar code information, comprising: a telephone system comprising a plurality of telephone sets (6A,6B,6C) as set forth in any of the preceding claims, each of the plurality of telephone sets having a built-in optical scanner (1) for reading bar codes on a printed medium for transmission as decoded bar code information; a host processor for receiving the decoded bar code information and transmitting instructions to the telephone system; and a communications network (46) for establishing connection between the telephone system and the host processor.

16. The communications system of Claim 15, wherein the converting means comprises: means (11) for decoding the electrical signals digitized by the digitizing means into decoded bar code information.

17. The communications system of Claim 15, wherein the printed medium is a catalogue having at least one of the following: bar-coded telephone numbers, user identifications, user address, item information, shipping method, shipping address, and payment method.

18. The communications system of Claim 15, wherein the printed medium is a credit card having a bar coded account number.

19. The telephone set of Claim 1, wherein the indicia are bar code indicia.

## Patentansprüche

1. Telefongerät (6) mit einem Hörer bzw. Handgerät (a), welcher bzw. welches das Lesen von (Kenn-)Zeichen ermöglicht, wobei das Telefongerät Folgendes aufweist:
(a) Mittel zum Übertragen und Empfangen von Audiosignalen über ein Kommunikationsnetzwerk;
(b) einen optischen Scanner (1) mit
(i) Mitteln zum Emittieren eines Lichtstrahls, um über die (Kenn-)Zeichen zu scannen;
(ii) Mitteln zum Detektieren des von den (Kenn-)Zeichen reflektierten Lichtstrahls und zum Erzeugen entsprechender elektrische Signale, und
(iii) Mitteln (11, 12) zum Umwandeln der elektrischen Signale in decodierte (Kenn-)Zeicheninformation,
wobei der optische Scanner (1) in dem Hörer bzw. Handgerät (a) des Telefongeräts (6) ist, wobei das Telefongerät (6) ferner **dadurch gekennzeichnet ist, dass** der Hörer bzw. Handgerät einen Auslöser (8) zum Aktivieren des optischen Scanners zum Lesen der (Kenn-)Zeichen umfasst und daß der optische Scanner Mittel zum automatischen Ablenken des Lichtstrahls aufweist, so dass dieser über die (Kenn-) Zeichen scannt bzw. hinwegstreicht.

2. Telefongerät nach Anspruch 1, wobei das Telefongerät ferner einen Schalter (54) aufweist, welcher vorgesehen ist zum Schaltern zwischen zwei Betriebsarten des Telefongerätes.

3. Telefongerät nach Anspruch 2, wobei der Schalter (54) vorgesehen ist zum Aktivieren eines Pulsgenerators (48) oder eines Tongenerators (50), um die decodierte (Kenn-)Zeicheninformation als Wählimpulse bzw. als Töne über das Kommunikationsnetzwerk zu übertragen.

4. Telefongerät nach Anspruch 1, wobei das Telefongerät ferner Mittel (14) zur Leistungsversorgung des optischen Scanners (1) aufweist.

5. Telefongerät nach Anspruch 1, wobei das Telefongerät ferner eine manuelle Steuerung zur Eingabe und zum Löschen von (Kenn-)Zeichen umfasst, die von dem optischen Scanner (1) gelesen wurden, und zwar zur Übertragung über das Kommunikationsnetzwerk.

6. Telefongerät nach Anspruch 1, wobei das Telefongerät ferner Folgendes aufweist: einen Speicher (56) zum Speichern von decodierter (Kenn-) Zeicheninformation, von Telefonnummern oder Programmen zum Ausführen von Befehlen, die in das Telefongerät eingegeben werden ; eine Tastatur bzw. ein Tastenfeld (58) zum Empfangen von Telefonnummern und Befehlen ; und Mittel (45) zum Übertragen der Audiosignale und decodierten (Kenn-)Zeicheninformation und zum Empfangen von Kommunikationssignalen von dem Kommunikationsnetzwerk.

7. Telefongerät nach Anspruch 1, wobei die Emittier- und Detektiermittel in einem Scan-Modul (10) umfasst sind, das Folgendes aufweist: eine Laserlichtquelle (16) zum Emittieren des Lichtstrahls, ein Linsensystem (22) zum Fokussieren des Lichtstrahls, einen Spiegel (26) zum Richten des von dem Linsensystem fokussierten Lichtstrahls auf die (Kenn-) Zeichen, einen Motor zum Oszillieren bzw. Schwingen der Laserlichtquelle oder des Spiegels, so daß der Lichtstrahl über die (Kenn-)Zeichen scannt bzw. hinwegstreicht, und einen Detektor (30) zum Detektieren des von den (Kenn-)Zeichen reflektierten Lichtstrahls.

8. Telefongerät nach Anspruch 7, wobei die Emittier- und Detektiermittel ferner ein Fenster (20) aufweisen, und zwar für Licht, das sich zwischen dem Scan-Modul und den Detektiermitteln bewegt.

9. Telefongerät nach Anspruch 1, wobei die Umwandlungsmittel Folgendes aufweisen: Mittel (11) zum Digitalisieren der elektrischen Signale ; und Mittel (12) zum Decodieren der elektrischen Signale, die von den Digitalisiermitteln digitalisiert wurden, in decodierte (Kenn-)Zeicheninformation.

10. Telefongerät nach Anspruch 1, wobei das Telefongerät (6) ein kabelgebundenes Gerät, ein schnurloses Gerät oder ein mobiles bzw. zelluläres Gerät ist.

11. Telefongerät nach einem der vorhergehenden Ansprüche, gekoppelt mit einem Kommunikationsnetzwerk, wobei das Telefongerät ferner Folgendes aufweist: Mittel zum Übertragen der Audiosignale und decodierten (Kenn-)Zeicheninformation über das Kommunikationsnetzwerk.

12. Telefongerät nach Anspruch 2, wobei der Hörer bzw. das Handgerät ferner eine wiederaufladbare Batterie (14) umfasst zur Leistungsversorgung des optischen Scanners während tragbaren bzw. portablen Betriebs des Hörers bzw. Handgeräts.

13. Telefongerät nach Anspruch 11, wobei das Telefongerät ferner folgendes aufweist: einen Speicher (56) zum Speichern von decodierter (Kenn-) Zeicheninformation, von Telefonnummern oder Programmen zum Ausführen von Befehlen, die in das Telefongerät eingegeben werden ; eine Tastatur bzw. ein Tastenfeld (58) zum Empfangen von Telefonnummern und Befehlen ; und Mittel (45) zum Übertragen der Audiosignale und decodierten (Kenn-)Zeicheninformation an das Kommunikationsnetzwerk und zum Empfangen von Kommunikationssignalen von dem Kommunikationsnetzwerk.

14. Telefongerät nach Anspruch 2, wobei der Hörer bzw. Handgerät ein Fenster (5) umfasst, und zwar für Licht, das sich zwischen dem Hörer bzw. Handgerät und einem zu lesenden Strichcode bewegt.

15. Kommunikationssystem zum Übertragen decodierter Strichcode-Information, wobei das System Folgendes aufweist: ein Telefonsystem, das eine Vielzahl von Telefongeräten (6A, 6B, 6C) gemäß einem der vorhergehenden Ansprüche aufweist, wobei jedes der Vielzahl von Telefongeräten einen eingebauten optischen Scanner (1) besitzt zum Lesen von Strichcodes auf einem gedruckten Medium zur Übertragung als decodierte Strichcode-Information; einen Hostprozessor zum Empfangen der decodierten Strichcode-Information und zum Übertragen von Anweisungen an das Telefonsystem; und ein Kommunikationsnetzwerk (46) zur Herstellung einer Verbindung zwischen dem Telefonsystem und dem Hostprozessor.

16. Kommunikationssystem nach Anspruch 15, wobei die Umwandlungsmittel Folgendes aufweisen: Mittel (11) zum Decodieren der elektrischen Signale, die von den Digitalisiermitteln digitalisiert wurden, in decodierte Strichcode-Information.

17. Kommunikationssystem nach Anspruch 15, wobei das gedruckte Medium ein Katalog ist, der Folgendes umfasst: in Strichcodes umgewandelte Telefonnummern und/oder Benutzeridentifikationen und/oder Benutzeradressen und/oder Artikelinformation und/oder Versandart und/oder Versandadresse und/oder Zahlungsweise.

18. Kommunikationssystem nach Anspruch 15, wobei das gedruckte Medium eine Kreditkarte ist mit einer in einen Strichcode umgewandelten Kontonummer.

19. Telefongerät nach Anspruch 1, wobei die (Kenn-)Zeichen Strichcode-(Kenn-)Zeichen sind.

## Revendications

1. Poste de téléphone (6) muni d'un combiné (a) permettant de lire des signes comprenant :
(a) un moyen destiné à émettre et recevoir des signaux audio et sur un réseau de télécommunications ;
(b) un lecteur optique (1) comportant :
(i) un moyen destiné à émettre un faisceau lumineux le pour balayer les signes ;
(ii) un moyen destiné à détecter le faisceau lumineux réfléchi en retour par les signes et à produire des signaux électriques correspondants ; et
(iii) un moyen (11, 12) destiné à convertir les signaux électriques en information de signes décodée ; dans lequel ledit lecteur optique (1) se trouve dans
ledit combiné (a) du poste de téléphone (6), ledit poste de téléphone (6) étant en outre **caractérisé :**
**en ce que** ledit combiné comprend un déclencheur (8) destiné à activer ledit lecteur optique pour lire les signes ; et
**en ce que** ledit lecteur optique comprend un moyen destiné à dévier automatiquement ledit faisceau lumineux pour balayer lesdits signes.

2. Poste de téléphone selon la revendication 1, comprenant en outre un commutateur (54) prévu pour basculer entre deux modes de fonctionnement dudit poste de téléphone.

3. Poste de téléphone selon la revendication 2, dans lequel ledit commutateur (54) est prévu pour activer l'un ou l'autre d'un générateur d'impulsions et de tonalité (48, 50) de façon à émettre ladite information de signes décodée comme des impulsions de numérotation ou comme des sons, respectivement, sur ledit réseau de télécommunications.

4. Poste de téléphone selon la revendication 1, comprenant en outre un moyen (14) destiné à alimenter en énergie le lecteur optique (1).

5. Poste de téléphone selon la revendication 1, comprenant en outre une commande manuelle destinée à entrer et à annuler des signes qui ont été lus par le lecteur optique (1) pour émission sur le réseau de télécommunications.

6. Poste de téléphone selon la revendication 1, comprenant en outre : une mémoire (56) destinée à mémoriser l'information de signes décodée, des numéros de téléphone ou des programmes destinés à exécuter des instructions entrées dans le poste de téléphone ; un clavier (58) destiné à recevoir les numéros de téléphone et les instructions ; et un moyen (45) destiné à émettre les signaux audio et l'information de signes décodée et à recevoir des signaux de transmission provenant du réseau de télécommunications.

7. Poste de téléphone selon la revendication 1, dans lequel les moyens d'émission et de détection sont incorporés dans un module (10) de balayage comportant : une source (16) de lumière laser (16) destinée à émettre le faisceau lumineux, un système (22) de lentilles destiné à focaliser le faisceau lumineux, un miroir (26) destiné à diriger, vers les signes, le faisceau lumineux focalisé par ledit système de lentilles, un moteur destiné à faire osciller ladite source de lumière laser ou ledit miroir de façon que le faisceau lumineux balaye les signes, et un détecteur (30) destiné à détecter le faisceau lumineux réfléchi par les signes.

8. Poste de téléphone selon la revendication 7, dans lequel le moyen d'émission et de réception comprend en outre une fenêtre (20) destinée à faire passer la lumière entre le module de balayage et le moyen de détection.

9. Poste de téléphone selon la revendication 1, dans lequel le moyen de conversion comprend : un moyen (11) destiné à numériser les signaux électriques ; et un moyen (12) destiné à décoder les signaux électriques, numérisés par le moyen de numérisation, en information de signes décodée.

10. Poste de téléphone selon la revendication 1, dans lequel le poste de téléphone (6) est du type avec cordon, sans cordon ou cellulaire.

11. Poste de téléphone selon l'une quelconque des revendications précédentes, raccordé à un réseau de télécommunications, comprenant en outre :
un moyen destiné à émettre, sur le réseau de télécommunications, les signaux audio et l'information de signes décodée.

12. Poste de téléphone selon la revendication 2, dans lequel le combiné comprend en outre une batterie rechargeable (14) destinée à alimenter en énergie le lecteur optique pendant le fonctionnement en portatif du combiné.

13. Poste de téléphone selon la revendication 11, comprenant en outre : une mémoire (56) destinée à mémoriser l'information de signes décodée, des numéros de téléphone ou des programmes destinés à exécuter des instructions entrées dans le poste de téléphone ; un clavier (58) destiné à recevoir les numéros de téléphone ou les instructions ; et un moyen (45) destiné à émettre les signaux audio et l'information de signes décodée au réseau de télécommunications et à recevoir des signaux de transmission provenant du réseau de télécommunications.

14. Poste de téléphone selon la revendication 2, dans lequel le combiné comprend une fenêtre (5) destinée à faire passer de la lumière entre le combiné et un code à barres à lire.

15. Système de télécommunications destiné à émettre de l'information décodée de code à barres, comprenant : un système de téléphones comprenant une pluralité de postes de téléphone (6A, 6B, 6C) tels que présentés dans l'une quelconque des revendications précédentes, chacun de la pluralité des postes de téléphone comportant un lecteur optique (1) incorporé destiné à lire des codes à barres sur un support imprimé pour émission en tant qu'information décodée de code à barres ; un processeur hôte destiné à recevoir l'information décodée de code à barres et à émettre des instructions vers un le système de téléphones ; et un réseau (46) de télécommunications destiné à établir une connexion entre le système de téléphones et le processeur hôte.

16. Système de télécommunications selon la revendication 15, dans lequel le moyen de conversion comprend : un moyen (11) destiné à décoder les signaux électriques numérisés par le moyen de numérisation en information décodée de code à barres.

17. Système de télécommunications selon la revendication 15, dans lequel le support imprimé est un catalogue comportant au moins l'un des éléments suivants :
des numéros de téléphone sous forme de codes à barres, des identifications d'utilisateurs, des adresses d'utilisateur, de l'information sur des articles, un procédé d'expédition, une adresse d'expédition et un procédé de paiement.

18. Système de télécommunications selon la revendication 15, dans lequel le support imprimé est une carte de crédit comportant un numéro de compte sous forme de code à barres.

19. Poste de téléphone selon la revendication 1, dans lequel les signes sont des signes de codes à barres.
